# EUROPEAN PATENT APPLICATION

(11) **EP 2 116 941 A1**
(43) Date of publication of application: **11.11.2009**
(21) Application number: 09159612.2
(22) Date of filing: 07.05.2009
(51) Int. Cl.: G06F 17/24, G06Q 10/00

(54) **Interaction between web pages and local applications**

(30) Priority: 07.05.2008 US 51277 P
(71) Applicant: Research in Motion Limited, Waterloo, ON N2L 3W8 (CA); Fat Free Mobile Inc., Waterloo Ontario N2L 3WO (CA)
(72) Inventor: Smith, Christopher, Mississauga Ontario L4W 0B4 (CA); Mallick, Martyn Henri, Waterloo Ontario N2V 1K8 (CA); Kim, Sang Heun, Mississauga Ontario L4W 0B4 (CA); Stinson, Charles Laurence, Mississauga Ontario L4W 0B4 (CA)
(74) Representative: Patel, Binesh

(57) **Abstract**

There is disclosed a local application for a client machine such as a wireless device, and a method of operating the client machine. In an embodiment, the local application is responsive to an external trigger instruction via a web page in a web browser of the client machine, authenticating data access or functions of the local application. The local application may provide data maintained by the local application (e.g. in accordance with a form specified by the external trigger instruction invoking the local application). The external trigger instruction may be an invocation instruction embedded therein such as an extension embedded into the header or content type of the web page. The web page may further include field ID tags mapping specific data fields in the local application's data store to form input fields provided in the web page.

## Description

### FIELD

The present disclosure relates generally to web browsing and more particularly to the interaction between web pages and local applications.

### BACKGROUND

One popular way in which information is exchanged is through web browsing. Information may be exchanged to complete a transaction, such as an e-commerce based order, among other things. Information may be downloaded to a client machine (e.g. a wireless mobile device) as well as uploaded to a server. Information exchange, such as order processing, often involves the end user's manual input of billing and shipping addresses, phone numbers, names, etc. It may further involve receiving information such as a delivery date or confirmation order information and re-inputting such into a calendar or reminder application once an order is completed.

Currently, there are a number of ways in which online transactions may be made via a wireless mobile device. For example, using an Internet browser, the wireless mobile device may browse an online store, and the store may allow a user to create a name and password and to save payment (e.g. credit card) information at the online store for future purchases. Alternatively, form-filler functionality may be provided on the client machine's browser (e.g. Windows Live™ Toolbar includes credit card form filling options with password protection).

### BRIEF DESCRIPTION OF THE DRAWINGS

In the figures which illustrate exemplary embodiments:
FIG. 1 is an illustration of a device in accordance with an embodiment;
FIG. 2 is an illustrative example of a wireless mobile device that may provide an operating environment;
FIG. 3 is a schematic block diagram of an illustrative example of a network environment in which various embodiments may be practiced;
FIG. 4 shows a schematic block diagram of an illustrative electronic purchase system comprising the wireless mobile device and an address book in accordance with an embodiment; and
FIG. 5 is a flowchart showing operations of the system of FIG. 4 in accordance with one embodiment.

### DETAILED DESCRIPTION

It is repetitive and redundant to manually input information when the information often already exists on the client machine such as in a contact list (address book) data store maintained by a local application. While it is cumbersome and inefficient to manually input (e.g. type) information into a form of a web browser when the information is already in electronic form, it may be similarly cumbersome and inefficient to manually input information that is received by the client machine while browsing into a user interface of a local application for storing in its data store. Therefore, an integration that reduces users' input could be valuable to users. Prior approaches require a user to input the required information for storing remotely such as at the e-commerce web site or to input the information each time if they choose not to save their information in association with or at an e-commerce web site, and therefore making an online purchase may be cumbersome.

There is disclosed a local application for a client machine such as a wireless device, and a method of operating the client machine. In an embodiment, the local application is configured to be responsive to an external trigger instruction via a web page in a web browser of the client machine, authenticating the user for accessing data or functions of the local application upon invocation by the external trigger instruction. The local application may be configured to provide data maintained by the local application (e.g. for automatic population of a form specified by the external trigger instruction invoking the local application). The external trigger instruction in the web page accessed via the Internet web browser on the client machine may be an invocation instruction embedded therein. The local application may be configured to provide at least one of an API and a plug-in for invoking the local application. The invocation instruction may be an extension embedded into the header or content type of the web page accessed via the Internet web browser. The web page may further include field ID tags mapping specific data fields in the local application's data store to form input fields provided in the web page.

In one aspect, there is provided a method of communicating between a local application and a web browser in a client machine, the method comprising: receiving a web page including a trigger instruction for invoking the local application; invoking the local application in response to the trigger instruction; and authenticating use of the local application of the client machine upon invocation by the trigger instruction. The method may further comprise returning local application data maintained by the local application on the client machine for use by the web browser. The local application data may be returned for automatic population of a form specified by the trigger instruction invoking the local application. The web page accessed via the web browser may includes field ID tags mapping specific data fields in the local application data to form input fields provided in the web page for automatic population of the form. The form may comprise an e-commerce form for a purchase transaction.

The web page may comprise a local application trigger instruction embedded therein. The local application trigger instruction may comprise an extension embedded into the header of the web page accessed via the web browser. The extension may be a MIME content-type, and the extension is embedded in an HTTP header of the web page accessed via the web browser. The local application may comprise at least one of a plug-in to the web browser or an application programming interface with which to trigger invocation of said local application.

The client machine comprises a wireless mobile device.

In one embodiment, the local application may comprises an address book application and the method may further comprise at least one of: returning contact information maintained by the address book application for use by the web browser; and receiving contact information from the web browser for updating data maintained by the address book application.

In one embodiment, the local application may comprises a calendar application and the method may further comprise at least one of: returning appointment information maintained by the calendar application for use by the web browser; and receiving appointment information from the web browser for updating data maintained by the calendar application.

In one aspect, there is provided a client machine. The client machine comprises a processor; a memory coupled to the processor; and one or more components for data communication via a data communication network to enable web browsing, wherein said memory is adapted to store instructions for configuring the client machine to communicate between a local application and a web browser in the client machine, comprising: receiving a web page including a trigger instruction for invoking the local application; invoking the local application in response to the trigger instruction; and authenticating use of the local application upon invocation by the trigger instruction.

In one aspect there is provided a computer program product comprising a computer readable medium storing instructions for configuring a processor of a client machine to communicate between a local application and a web browser in the client machine, comprising: receiving a web page including a trigger instruction for invoking the local application; invoking the local application in response to the trigger instruction; and authenticating use of the local application upon invocation by the trigger instruction.

In one embodiment there is provided a system comprising: a client machine; and a web server, coupled to the client machine via a data communications network, said server hosting a web site comprising at least one web page having a trigger instruction for triggering a local application of the client machine; and wherein the client machine comprises: a processor; a memory coupled to the processor; and one or more components for data communication via a data communication network to enable web browsing, wherein said memory is adapted to store instructions for configuring the client machine to communicate between a local application and a web browser in the client machine, comprising: receiving a web page including a trigger instruction for invoking the local application; invoking the local application in response to the trigger instruction; and authenticating use of the local application upon invocation by the trigger instructions.

As noted, the present disclosure relates generally to web browsing. More particularly, it relates to the interaction between web pages and local applications. Those applications may maintain a data store locally, remotely or both relative to the computing device on which the local application executes.

Typically, as persons of ordinary skill in the art will understand, web pages are served by a web server to a client machine configured with a web browser. A collection of web pages may define a web site having a domain name. Web pages are typically communicated over a data communication network (e.g. public, private or a combination thereof) using various protocols, chief among them being hyper text transfer protocol (HTTP) over transmission control protocol/internet protocol (TCP/IP). The data communications network may comprise one or more of wired and wireless networks.

In accordance with a present embodiment, web pages may be integrated with local applications (other than the browser per se) to provide access to data maintained in the data stores of such local applications or to access functions and features of the local application. The present embodiment will be described with reference to a local application comprising an address book application providing a list of contacts and associated (i.e. an address book) stored locally to the client device. Though an exemplary address book is described, persons of ordinary skill in the art will appreciate that other such local applications may be used such as a calendar application, password keeper application, messaging application, voice (telephone) application, etc. Moreover, though the data stored by the address book in the present embodiment is primarily or first stored locally, such data may be stored remotely and accessed from remote stores.

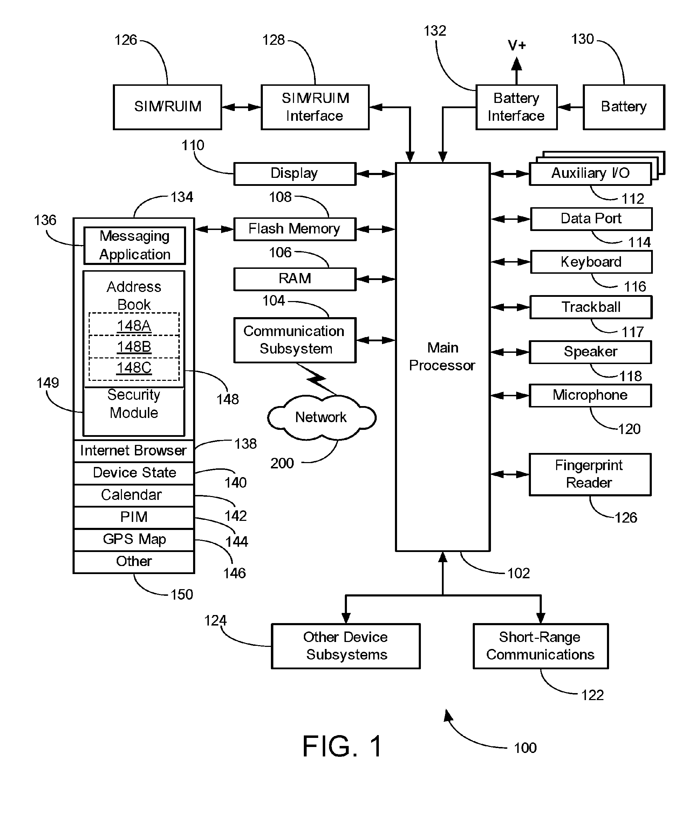

Client machines may comprise various computing devices configured for data communications and web browsing, including personal computers, smart phones, laptops, personal data assistants, etc. Some such machines communicate wirelessly as described further herein below. For example, shown in FIG. 1 is a schematic block diagram of an illustrative wireless mobile device 100. The wireless mobile device 100 may comprise a number of components, including a main processor 102 which controls the overall operation of wireless mobile device 100. Communication functions, including data and voice communications, may be performed through a communication subsystem 104. The communication subsystem 104 may receive messages from and send messages to a wireless network 200.

The main processor 102 may also interact with additional subsystems such as a random access memory (RAM) 106, a flash memory 108, a display 110, an auxiliary input/output (I/O) subsystem 112, a data port 114, a keyboard 116, a trackball 117, a speaker 118, a microphone 120, short-range communications 122, other device subsystems 124. Device 100 also includes an optional fingerprint reader module 126. In some embodiments, the keyboard 116 may comprise a virtual keyboard or a physical keyboard or both. In some embodiments, the display 110 may comprise a touchscreen display.

Some of the subsystems of the wireless mobile device 100 may perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list. The trackball 117 may be used for various navigation functions, such as navigating through a graphical user interface (GUI) menu displayed on display 110. The trackball 117 may also be configured with a secondary actuation feature such a as click button feature, to allow selection of a highlighted item.

Still referring to FIG. 1, operating system software used by the main processor 102 is typically stored in a persistent store such as flash memory 108. Those skilled in the art will appreciate that the operating system, specific device applications, or parts thereof, may be temporarily loaded into a volatile store, such as the RAM 106, for processing by main processor 102.

The wireless mobile device 100 may send and receive communication signals over the wireless network 200 after required network registration or activation procedures have been completed. Network access may be associated with a subscriber or user of the wireless mobile device 100 such as via SIM/RUIM interface 128 to a SIM/RUIM card 126 storing subscriber information (though not shown, a USIM or other SIM equivalent may also be used).

The wireless mobile device 100 may be a battery-powered device and may include a battery interface 132 for receiving one or more rechargeable batteries 130. In some embodiments, the battery 130 may be a smart battery with an embedded microprocessor. The battery interface 132 is coupled to a regulator (not shown), which assists the battery 130 in providing power V+ to the wireless mobile device 100. The battery 130 may be used to power all components and modules in the wireless mobile device 100. In some embodiments, the device 100 may be solar powered or otherwise powered with or without use of a battery.

The main processor 102, in addition to its operating system functions, enables execution of various software applications 134 on the wireless mobile device 100. A subset of software applications 134 that control basic device operations, including data and voice communication applications, will normally be installed on the wireless mobile device 100 during its manufacture.

The software applications 134 may include a messaging application 136. The messaging application 136 can be any suitable software program that allows a subscriber or user of the wireless mobile device 100 to send and receive wireless text communications. Various alternatives exist for the messaging application 136 as is well known to those skilled in the art. Messages that have been sent or received by the user are typically stored in local storage such as flash memory 108 of the wireless mobile device 100, or in some other suitable storage element in the wireless mobile device 100. In an alternative embodiment, some of the sent and received messages may be stored remotely from the wireless mobile device 100 such as in a data store of an associated host system that the wireless mobile device 100 communicates with. In an embodiment, the messaging application 136 may include a Message List user interface that is configured to make viewable a list of message objects (i.e. email messages) in a convenient list form.

Still referring to FIG. 1, wireless mobile device 100 may include an address book 148 that may be operatively integrated with main processor 102, RAM 106, display 110, short-range communications subsystem 122, fingerprint reader module 180, or various other device subsystems 124 and software applications 134 (e.g. messaging application 136, an Internet web browser 138) to provide various address book application functions.

The wireless mobile device 100 may further include a device state module 140, a calendar 142, a Personal Information Manager (PIM) 144, navigational application 146 for directions, and various other modules 150. Additional software applications (or data therefore) may also be loaded onto the wireless mobile device 100 through at least one of the wireless network 200, the auxiliary I/O subsystem 112, the data port 114, the short-range communications subsystem 122, or the various other device subsystems 124. Navigational application 146 may be configured to use a GPS (not shown) or determine location by other means. Directions may be determined and presented. Maps may be made viewable.

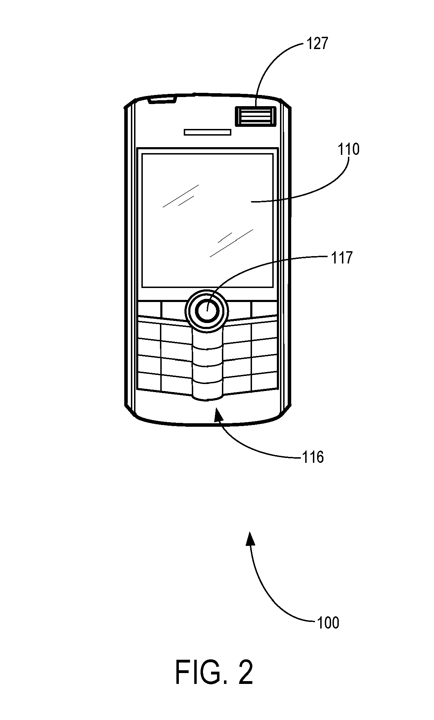

Now referring to FIG. 2, shown is an illustrative front view of a wireless mobile device 100 that may provide a suitable operating environment. In this particular example, mobile communication device 100 comprises a handheld smart phone; however, the scope of the present disclosure is not limited to a specific type of device. As shown, the wireless mobile device 100 may include a display 110, a keyboard 116, and other input or navigation means such as a trackball 117, and a fingerprint reader 127 operatively connected to the fingerprint reader module 180 of FIG. 1. The display 110 may be configured to display various screens allowing the user of device 100 to view screen outputs from the various software applications 134, including web browser 138 and address book 148. Display 110 may also be configured to provide a touch-sensitive screen input in response to a prompt or query displayed on display 110.

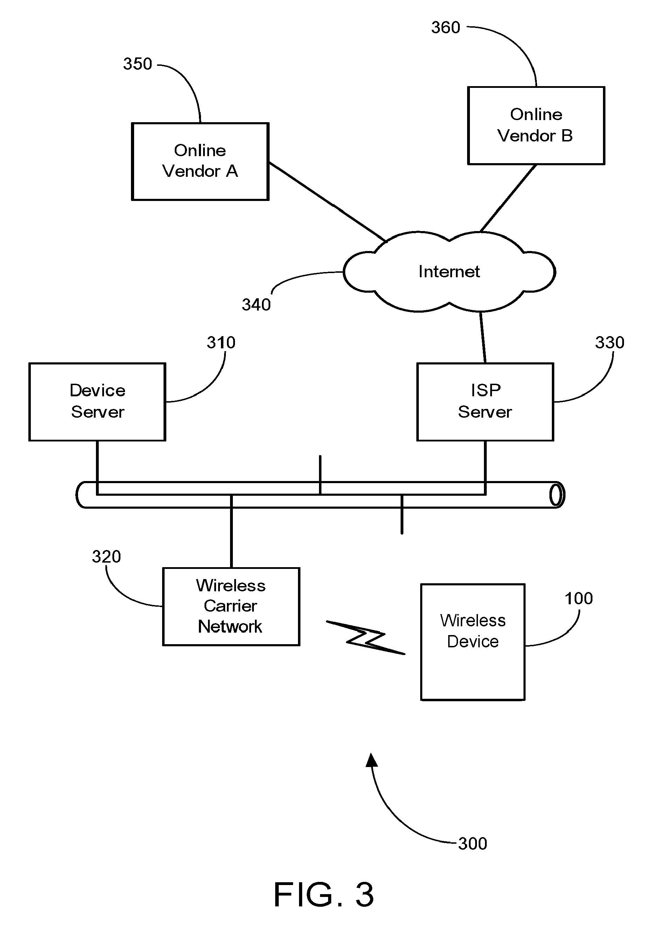

Now referring to FIG. 3, shown is a schematic block diagram of an illustrative network environment 300 in which various embodiments may be practiced. As shown, network environment 300 may include a device server 310 operatively connected to the wireless mobile device 100 via a wireless carrier network 320. Though not shown, a Wi-Fi network or other access point may be used for wireless connectivity, as applicable, to the capabilities of the device 100. Any data transferred between device server 310 and wireless mobile device 100 may be encrypted using algorithms such as Triple Data Encryption Standard (Triple DES) and Advanced Encryption Standard (AES), which use 112-bit keys and 256-bit keys respectively, to secure wireless communications. An Internet server 330 (e.g. a gateway) may also be provided in the network environment 300 such that device 100 may access the Internet 340. In an embodiment, the Internet 340 may provide access to online vendors having web servers 350, 360 from which goods or services may be electronically purchased using wireless mobile device 100.

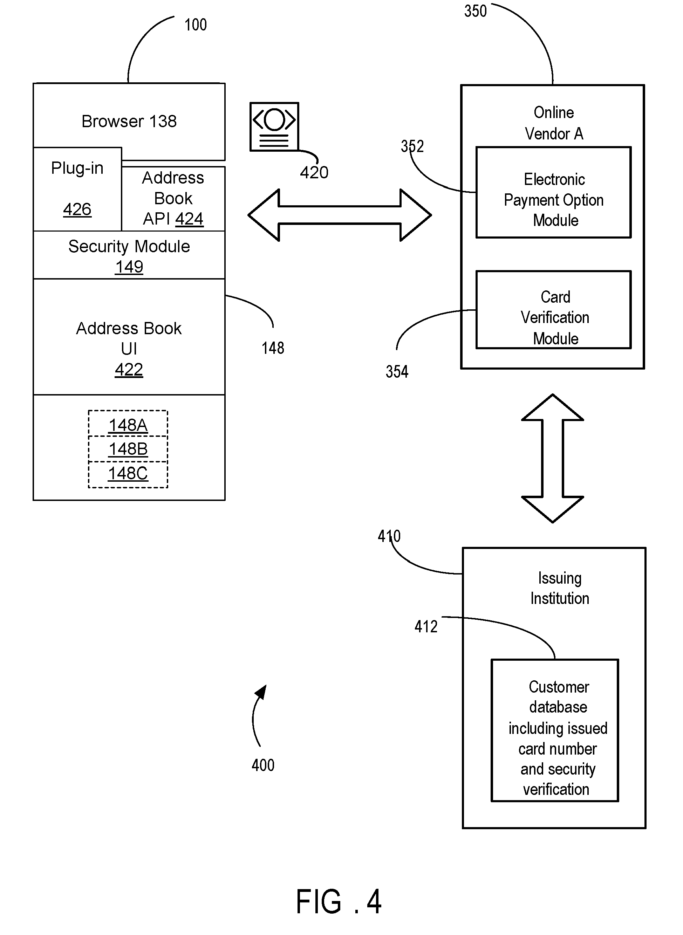

Now referring to FIG. 4, shown is a schematic block diagram of an illustrative electronic purchase system 400 for conducting an electronic purchase using the wireless mobile device 100 and the address book 148 in accordance with an embodiment. As shown, the address book 148 may be configured to access storage means on a persistent store (e.g. flash memory 108). In a present embodiment, address book 148 is configured to store a plurality of contact information e.g. 148A, 148B, 148C for respective individual contacts. A contact may comprise an individual in some instances, or it may comprise an organization or company in some instances. The contact information may comprise data for various contact information fields including, without limitation, first name, last name, nickname, title, company name, one or more physical addresses (including, e.g., home address and work address, each of which may include, e.g., mailing address, city, state or province, country, zip code or postal code), one or more phone numbers (including, e.g., home number, work number, mobile number, etc.), email address or other messaging address information, web address, etc. The contact information may comprise additional data for additional contact information fields such as a picture or image, birthday, anniversary, passport information (including country, number, and expiration date) etc. Other contact information fields may be included. A particular contact field may have a plurality of instances of data (e.g. email address1, email address2, ... email addressN; or home address1, home address 2, ... home address N, etc.). A contact entry may be established for a device 100 user's own respective information.

Address book 148 typically includes a user interface 422 for displaying and entering contact information. Such information may also be stored to device 100 from a remote device (not shown) having an address book application (e.g. MS Outlook^{™}, Exchange^{™} global address list, among others) with which device 100 may be synchronized using an appropriate synchronization application (not shown).

In a present embodiment, the online vendor may provide a web server 350 having an electronic payment module 352 suitably configured to enable purchases from the online vendor's web site. Using the address book 148 carried within wireless mobile device 100, information may be obtained and supplied to the online vendor's web site to facilitate the transaction. The electronic payment module 352 may provide a user interface (e.g. via a web page 420) for viewing on display 110 of wireless mobile device 100, and various menu options and controls may be presented for selection or activation using keyboard 116 or trackball 117. The online vendor 350 may also have a card verification module 354, for verifying the authenticity of a credit card or other payment mechanism used for purchase on the online vendor's web server 350. Still referring to FIG. 4, an issuing institution 410 may provide services for verifying the authenticity of a card issued by the issuing institution to an end user of the wireless mobile device 100. As shown, issuing institution 410 may have a customer database 412 including issued card numbers, and security verification information, such as a card verification number or CVN.

In accordance with the present embodiment, web sites can be configured or adapted to interact with local applications (e.g. 148, 142, 144, 150, etc.) of device 100. Such interactions may be permitted following authentication operations as described further below.

For example, address book 148 may be configured to provide a public application programming interface (API) 424 for use by other applications such as Internet browser 138 to access contact information (e.g. 148A, 148B 148C) stored by the address book 148. Alternatively, an address book plug-in 426 may be provided to browser 138 to access such contact information. In either or both embodiments, access via such interactions may be governed by security module 149.

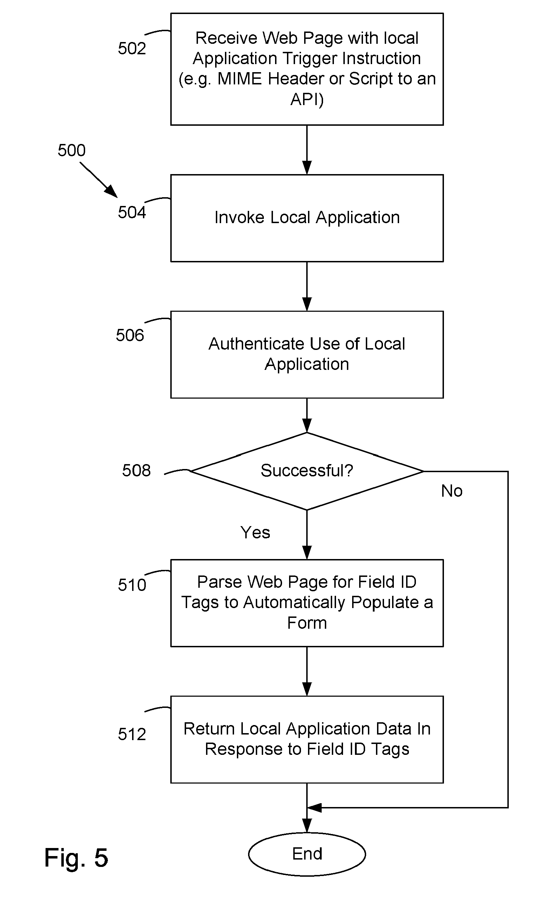

With reference to FIGs. 4 and 5, in one embodiment, address book 148 monitors or listens (via plug-in 426) to the Internet web browser 138 on the wireless mobile device 100 for a preconfigured address book trigger instruction that may be embedded in a web page loading into the Internet web browser 138 (502). The address book trigger instruction is suitably configured to invoke the address book 148 (504) when the wireless mobile device 100 visits a web site via the Internet web browser 138. In this illustrative example, the external trigger instruction may be a web page (e.g. 420) from a third party e-commerce site (e.g. 350) having an address book trigger instruction embedded in a web page header.

As an illustrative example, the address book trigger instruction may be a MIME (Multimedia Internet Mail Extensions) content-type header embedded in the web page HTTP header. Upon being invoked, the address book 148 may present an authentication process 506-508 (e.g. using security module 149) that must be successfully completed by the user before the user can access the contents of the address book 148. However, without successful authentication, no further access to the address book application 148 may be permitted (No branch at 508).

In an embodiment, the web page having the embedded address book trigger instruction in its header may be a "check-out" page having a fillable form. Once a user has been authenticated, the address book 148 may parse the HTML protocol in the check-out page, and take note of any field ID tags provided in the form input fields (510). An option may be provided to select a suitable contact from the address book 148 for use in the check-out, particularly for automatic population of the form. The address book 148 can then automatically populate the fillable form on the check-out page based on a mapping of the contact information stored in the address book 148 to the appropriate form input fields (e.g. using the field ID tags).

When invoked as described above, and the authentication process has been completed, the address book 148 recognizes a number of field ID tags embedded the HTML code from the web page loaded from the third party e-commerce web site (510). In an embodiment, these field ID tags may be configured to map specific contact data fields to information required by specific form input fields in the fillable form provided at the e-commerce web site (512). For example, the field ID tags may map each of a name, address, work and home contact number, email address, etc. from data fields in the address book 148 to corresponding form input fields of the web page 420 for posting (e.g. via HTTP Post) to site 350.

The data type used in the address book 148 is compatible with the form input fields provided at the third party e-commerce web site in the present embodiment. Alternatively, a suitable data type conversion module may be provided. Data typing may be specified by the field ID tags used for mapping or to indicate conversion requirements. Conversion may be performed by the address book 148, a common data conversion module on device 100 (not shown) shared among applications such as address book 148 or even by the e-commerce web site.

In another embodiment, a public API 424 may be provided with (a collection of) application interfaces for use to access the address book 148 from an application such as the Internet browser 138 executing on the wireless mobile device 100. A web page (e.g. 420) may be provided with code (e.g. JavaScript ^{™}) which invokes the address book features enabled by the API. Similarly, access may be governed by security module 149 requiring user intervention to invoke the API's enabled features.

In this case, the third party application running on the device 100 and the public API 424 is the external trigger instruction for invoking the address book application 148 (and its UI 422 as applicable). Address book application 148 may be configured to provide data (e.g. contact information (148A, 148B, 148C) from its data store) in different formats (e.g. such as string arrays or other format) for handling by the script or other code invoking the API 424.

Though not shown, authentication operations of security module 149 may be configured to grant (and hence deny, as applicable) access to the address book 148. Such operations may be invoked by the plug-in 426 or API 424. In one embodiment, authentication operations notify the user via a pop-up message that the Internet browser is attempting to access the address book 148. The message requests user confirmation to permit such access. If user confirmation is received, an authentication challenge may be presented requiring a user to provide information with which to verify the user's authenticity. The information may be a password or biometric data (e.g. input via fingerprint reader 180) or both. The input data is verified with locally stored data (which may be stored in encrypted form). Only if the user is successfully authenticated, address book operations invoked by the web page may proceed. Otherwise, an exception may be occasioned and manual entry of the data may then be enabled. Typically, if address book 148 is invoked directly from its UI 422, security module 149 need not authenticate the user.

Though the example discussed is with reference to the completion of an e-commerce transaction, obtaining information already stored to a data store of an address book 148, persons of ordinary skill in the art will understand that invocations of address book 148 (or other local applications on device 100) may be made for other purposes. Though the illustrative example shows address book application 148 providing or otherwise returning contact information to the web browser, such application 148 may be invoked to receive information to update the data it maintains. For example, web site 350 may be an on-line directory (or simply a web page) providing contact information for one or more contacts. The plug-in may examine the web page and determine the presence of contact information (e.g. using one or more rules or heuristics (not shown)). The plug-in may prompt a user of device 100 asking whether the user wishes to invoke address adding features of address book 148 to add the contact information (i.e. following authentication operations).

As noted, other applications such as calendar 142, may be similarly configured as described with reference to FIG. 4 to interact with web pages via browser 138. An e-commerce transaction for products or services may be associated with a delivery date (such as when to expect a shipment or when to attend an event). Such appointment information may be provided by a web page and via a trigger instruction such as a plug-in or API invocation to update (i.e. add or change) appointment data maintained by calendar application 142. An on-line e-commerce purchase transaction may relate to the purchase or other reservation of an airline ticket, car rental, hotel stay, cruise, etc. These activities may have more than one appointment event (i.e. date) associated with the transaction such as a start and end date or multiple dates and times for legs of a long journey. Dates and times for such appointment events may relate to different time zones. Multiple appointments could be automatically added to the calendar and in the appropriate time zone.

A web page may include a messaging address or telephone number, and the web browser 138 can be configured (e.g. via plug-in 426 or API 424) and triggered to invoke a corresponding application (e.g. 136, 150) to start to send a message to that address or start to make a call to that number. A further local application that may be invoked as described may include navigation application 146. An address for an event venue (e.g. concert arena, restaurant, hotel, business meeting, etc.) could be communicated from a web page to the local navigation application and directions could be provided.

While illustrative embodiments have been described above, it will be appreciated that various changes and modifications may be made. More generally, the scope of the invention is defined by the following claims.

## Claims

1. A method of communicating between a local application (148) and a web browser (138) in a client machine (100), the method comprising:
receiving (502) a web page (420) including a trigger instruction for invoking the local application;
invoking (504) the local application in response to the trigger instruction; and
authenticating (506) use of the local application of the client machine upon invocation by the trigger instruction.

2. The method of claim 1, further comprising returning (512) local application data maintained by the local application on the client machine for use by the web browser.

3. The method of claim 2, wherein the local application data is returned for automatic population of a form (510) specified by the trigger instruction invoking the local application.

4. The method of claim 3, wherein the web page accessed via the web browser includes (510) field ID tags mapping specific data fields in the local application data to form input fields provided in the web page for automatic population of the form.

5. The method of claim 3 or 4 wherein the form comprises an e-commerce form for a purchase transaction.

6. The method of any one of claims 1 to 5, wherein the web page comprises a local application trigger instruction embedded therein.

7. The method of claim 6, wherein the local application trigger instruction comprises an extension embedded into the header of the web page (502) accessed via the web browser.

8. The method of claim 7, wherein the extension is a MIME content-type, and the extension is embedded in an HTTP header of the web page accessed via the web browser.

9. The method of any one of claims 1 to 6, wherein the local application comprises at least one of a plug-in (426) to the web browser or an application programming interface (424) with which to trigger invocation of said local application.

10. The method of any one of claims 1 to 9 wherein the client machine comprises a wireless mobile device (100).

11. The method of any one of claims 1 to 10 wherein the local application comprises an address book application (148) and the method further comprises at least one of:
returning contact information (148A, 148B, 148C) maintained by the address book application for use by the web browser; and
receiving contact information from the web browser for updating data maintained by the address book application.

12. The method of any one of claims 1 to 11 wherein the local application comprises a calendar application (142) and the method further comprises at least one of:
returning appointment information maintained by the calendar application for use by the web browser; and
receiving appointment information from the web browser for updating data maintained by the calendar application.

13. A client machine (100) comprising:
a processor (102);
a memory (106) coupled to the processor; and
one or more components (126, 128, 104, 122) for data communication via a data communication network to enable web browsing,
wherein the memory is adapted to store instructions for configuring the client machine to perform a method in accordance with any one of claims 1 to 12.

14. A computer program product comprising a computer readable medium storing instructions for configuring a processor of a client machine (100) to perform a method in accordance with any one of claims 1 to 12.

15. A system (300, 400) comprising:
a client machine (100) in accordance with claim 13; and
a web server (350, 360) coupled to the client machine via a data communications network (340), said server hosting a web site comprising at least one web page (420) having a trigger instruction for triggering a local application of the client machine.
